# EUROPEAN PATENT APPLICATION

(11) **EP 4 838 389 A1**
(43) Date of publication of application: **11.11.2026**
(21) Application number: 26174138.3
(22) Date of filing: 23.04.2026
(51) Int. Cl.: G06F 21/45, G06F 21/31, H04N 1/44, G06F 21/60

(54) **PROCESSING APPARATUS AND METHOD FOR CONTROLLING PROCESSING APPARATUS**

(30) Priority: 09.05.2025 JP 2025078693
(71) Applicant: Sharp Kabushiki Kaisha, Sakai City, Osaka 590-8522 (JP)
(72) Inventor: NODA, Shoji, Osaka, 590-8522 (JP)
(74) Representative: Müller Hoffmann & Partner

(57) **Abstract**

A processing apparatus includes one or more controllers and a display. The one or more controllers display a reset screen relating to a reset of an administrator password on the display. The reset screen includes a message relating to connection of an external storage device in which reset key data is stored and an input field for entering a new password to be set after the reset.

## Description

### BACKGROUND OF THE INVENTION

### Field of the Invention

The present disclosure relates to a processing apparatus and the like.

### Description of the Background Art

Some processing apparatuses, such as image forming apparatuses, restrict use of the processing apparatus by a password assigned to each user. For example, a processing apparatus known in Japanese Unexamined Patent Application Publication No. 2017-91107 includes a unit that resets a password in case a user forgets the password.

A problem to be solved by the present disclosure is to improve operability when resetting a password of a processing apparatus.

### SUMMARY OF THE INVENTION

The present disclosure provides a processing apparatus that includes one or more controllers and a display. The one or more controllers cause the display to display a reset screen that is a screen relating to a reset of an administrator password. The reset screen includes a message relating to connection of an external storage device in which reset key data is stored, and an input field for entering a new password to be set after the reset.

The present disclosure also provides a method for controlling a processing apparatus that includes one or more controllers and a display. The method includes causing the display to display a reset screen that is a screen relating to a reset of an administrator password. The reset screen includes a message prompting connection of an external storage device in which a reset key data is stored, and an input field for entering a new password to be set after the reset.

According to the present disclosure, operability when resetting a password of a processing apparatus can be improved.

### BRIEF DESCRIPTION OF THE DRAWINGS

FIG. 1 is an external perspective view of an image forming apparatus according to a first embodiment of the present disclosure.
FIG. 2 is a block diagram of the image forming apparatus according to the first embodiment of the present disclosure.
FIG. 3 is a block diagram of a controller of the image forming apparatus according to the first embodiment of the present disclosure.
FIG. 4 is a block diagram of a storage unit of the image forming apparatus according to the first embodiment of the present disclosure.
FIG. 5 is an example of a screen displayed on a display when an image forming apparatus performs a general administrator password reset.
FIG. 6 is a conceptual schematic diagram of a general reset method for an administrator password of an image forming apparatus.
FIG. 7 is an example of a screen displayed in a general reset method for an administrator password of an image forming apparatus.
FIG. 8 is an example of a screen displayed on the display of the image forming apparatus according to the first embodiment of the present disclosure.
FIG. 9 is a flowchart for explaining an administrator password reset process of the image forming apparatus according to the first embodiment of the present disclosure.
FIG. 10 is an example of an administrator password reset screen displayed by the image forming apparatus according to the first embodiment of the present disclosure.
FIG. 11 is a conceptual schematic diagram for explaining a reset method of the image forming apparatus according to the first embodiment of the present disclosure.
FIG. 12 is an example of a screen displayed on the display of the image forming apparatus according to the second embodiment of the present disclosure.
FIG. 13 is an example of a screen displayed on the display of the image forming apparatus according to the third embodiment of the present disclosure.
FIG. 14 is an example of a screen displayed on the display of the image forming apparatus according to the fourth embodiment of the present disclosure.
FIG. 15 is an example of a screen displayed on the display of the image forming apparatus according to the fourth embodiment of the present disclosure.

### DESCRIPTION OF THE PREFERRED EMBODIMENTS

Generally, when a processing apparatus such as a multi-function peripheral/printer (MFP) is installed and use thereof is started, initial setting of an administrator password of the processing apparatus is often performed. In recent years, this type of password initial setting method may differ depending on the destination of the processing apparatus. This is because security requirements differ depending on the destination of the processing apparatus.

Further, in case a user forgets a password, a processing apparatus generally has a mechanism to reset the password. Generally, when performing a password reset, it is necessary to enter information for reset. Here, as a password reset method, a method in which the password is returned to an initial value when the password is reset, and a method in which the user is requested to reset the password when the password is reset, are considered. In the latter case, if an input screen for information for reset and a password resetting screen are displayed as separate screens, the number of screen transitions increases, and usability decreases.

In the present disclosure, operability when resetting a password of a processing apparatus is improved by making an input screen for information for reset and a password resetting screen the same screen.

Hereinafter, an embodiment in which the processing apparatus of the present disclosure is applied to an MFP will be described. The following embodiment is described as an example of the invention described in the claims, and the technical scope of the present disclosure is not limited to the description of the following embodiment. Further, in the following embodiment, a case where the processing apparatus of the present disclosure is applied to an MFP will be described, but the processing apparatus is not limited to an MFP. The present disclosure is applicable to general processing apparatuses that request reset key data such as an externally issued reset key file for resetting a password. This type of processing apparatus includes, for example, various servers in addition to an MFP.

### 1. First Embodiment

A first embodiment will be described. Hereinafter, an administrator password is also simply referred to as a password. An administrator of an image forming apparatus 10 is simply referred to as an administrator.

### 1.1 Overall Configuration

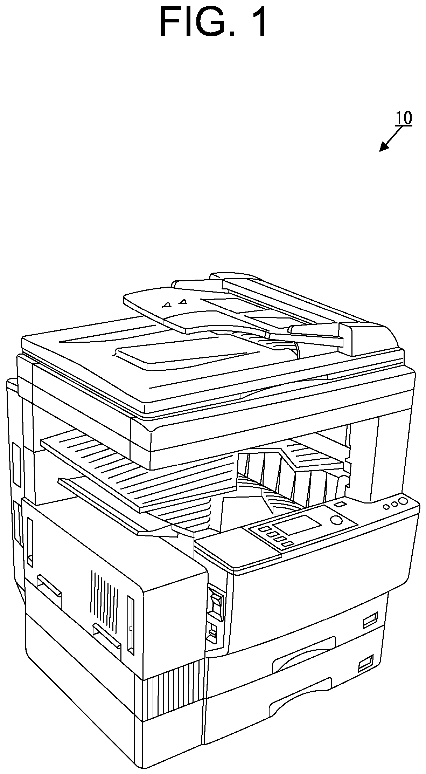

FIG. 1 is an external perspective view of the image forming apparatus 10 according to the first embodiment of the present disclosure. The image forming apparatus 10 is a processing apparatus also called an MFP or a multi-function peripheral, and typically includes a copy function, an image scanner function, a facsimile function, and a printer function. The image forming apparatus 10 may further include other functions, such as an e-mail transmission/reception function and a file server function.

### 1.2 Hardware Configuration

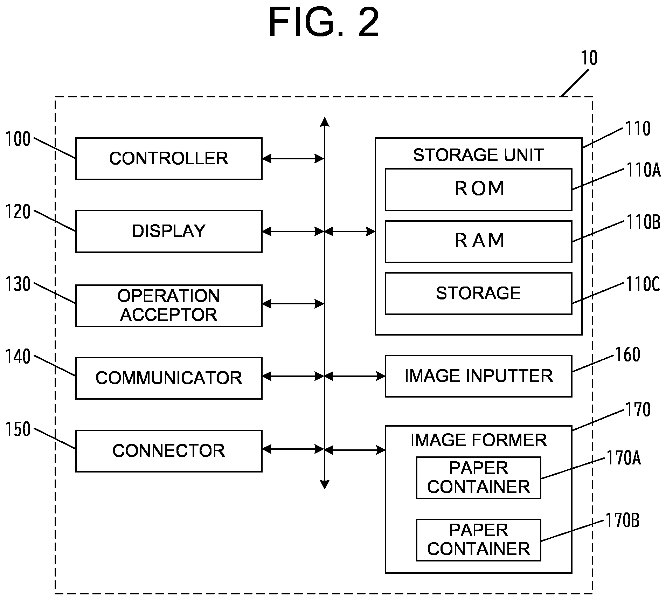

FIG. 2 is a block diagram of the image forming apparatus 10 according to the first embodiment of the present disclosure. A controller 100 controls the entire image forming apparatus 10. The controller 100 includes one or more control devices or one or more control circuits, and is composed of, for example, a central processing unit (CPU) that is a processor for executing various types of arithmetic processing, a system on a chip (SoC), or the like.

Further, the controller 100 can realize each function by reading a program stored in a storage unit 110 and executing a process.

The storage unit 110 stores various programs or various data necessary for operation of the image forming apparatus 10. The storage unit 110 includes a ROM 110A, a RAM 110B, and a storage 110C. The ROM 110A is a read only memory and stores, for example, a basic input/output system (BIOS) or firmware. The ROM 110A is also used as a main storage device of the controller 100. The RAM 110B is a storage device capable of temporary storage such as a dynamic random access memory (DRAM). The storage 110C is a non-transitory storage device such as a solid state drive (SSD) composed of a semiconductor memory or a hard disk drive (HDD) composed of a magnetic disk. The storage unit 110 includes one or more of each of the ROM 110A, the RAM 110B, and the storage 110C. Although the storage unit 110 is shown as one component for convenience of description, it may be configured as separate devices for each application, such as an area used for program execution (main storage area), an area for storing programs and data (auxiliary storage area), and an area used for cache.

A display 120 displays images and characters. For example, it includes a liquid crystal display (LCD) or an organic electro-luminescence (EL) panel. The display 120 may be a single display device or may include a display device connected externally.

An operation acceptor 130 receives operation inputs from a user. For example, the operation acceptor 130 includes hardware keys or software keys. Further, the operation acceptor 130 includes operation keys such as a task key for instructing execution of a task such as FAX transmission or image reading, and a cancel key for instructing cancellation of an operation. The operation acceptor 130 can be configured as a touch panel that allows input via the display 120. When configured as a touch panel, the operation acceptor 130 detects a user's touch, tap, swipe operation, or the like on an object displayed via the display 120, and acquires coordinate position of touch panel information, pressure sensitive information, or the like. In this case, as an input method of the touch panel, a general input method such as a resistive film method, an infrared method, an electromagnetic induction method, or a capacitive method can be adopted.

A communicator 140 connects to a network. The communicator 140 includes, for example, an interface connectable to a wired local area network (LAN), a wireless LAN, or a long term evolution (LTE) network. By connecting the communicator 140 to a network, it is connected to other devices or external networks. In addition, the communicator 140 may be an interface for performing short-range wireless communication such as near field communication (NFC) or Bluetooth (registered trademark).

A connector 150 connects the image forming apparatus 10 and other equipment. For example, the connector 150 is a USB interface, to which a USB memory or the like is connected. In addition to the USB interface, the connector 150 may be an interface such as HDMI (registered trademark).

An image inputter 160 reads an image (original) and outputs it as image data. The image inputter 160 includes a general scanner (image input device). Further, the image inputter 160 may read and input image data from an external storage medium such as a USB memory, or may receive an image via a network.

An image former 170 forms (prints) an image on a medium such as copy paper based on image data. The printing method of the image former 170 is arbitrary, and may be, for example, an inkjet printer, a laser printer, or a thermal transfer printer. The image former 170 may be a monochrome printer or a color printer. The image former 170 includes a plurality of paper containers that store media (also referred to as printing paper or paper) and supply them for image formation. Although the image former 170 includes two paper containers 170A and 170B, it may include three or more paper containers. The image former 170 includes a transport mechanism that transports a medium from these plurality of paper containers. The image former 170 may further include a sorter mechanism or the like that sorts the media after images are formed.

### 1.3 Software Configuration

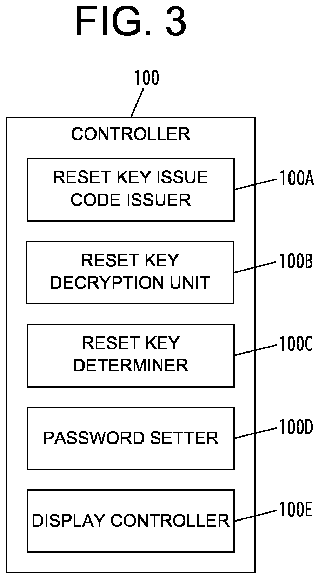

FIG. 3 is a block diagram of the controller 100 of the image forming apparatus 10 according to the first embodiment of the present disclosure. The controller 100 includes a reset key issue code issuer 100A, a reset key decryption unit 100B, a reset key determiner 100C, a password setter 100D, and a display controller 100E.

The reset key issue code issuer 100A issues a reset key issue code. In order to reset the password of the image forming apparatus 10, it is necessary to input reset key data such as a reset key file into the image forming apparatus 10. The reset key file is an example of reset key data generated by a reset key issue authority holder based on a reset key issue code generated by the image forming apparatus 10.

The reset key issue code is, for example, a character string of 8 characters, and more preferably, a character string of 9 characters or more. The reset key issue code issuer 100A may always issue the same reset key issue code, or may issue a different reset key issue code each time an administrator password reset screen D71 described later is displayed. For example, of the character string of 9 characters or more constituting the reset key issue code, an 8-character string uses a unique value determined for each model of the image forming apparatus 10, while characters other than those 8 characters may be generated based on, for example, a serial number uniquely assigned to an individual of the image forming apparatus 10, identification information of an owner or administrator of the image forming apparatus 10, time information representing time when the administrator password reset screen D71 was displayed, a randomly generated character string, or the like. In this specification, the number of digits and the number of characters have the same meaning; for example, a 20-digit character string indicates a character string consisting of 20 characters.

The reset key data is preferably a reset key file with a size of less than 100 bytes, for example. Instead of a reset key file, a reset key consisting of a character string of about 20 digits, for example, may be used.

The reset key decryption unit 100B decrypts encrypted reset key data when the reset key data is encrypted. Any encryption method for encrypting the reset key data may be used, and common key encryption or public key encryption may be used.

The reset key determiner 100C determines whether reset of the password is possible based on reset key data issued by the reset key issue authority holder based on the reset key issue code and notified to a service person in charge of maintenance and management of the image forming apparatus 10 (hereinafter simply referred to as a service person of the image forming apparatus 10) or an administrator. The reset key issue code is an example of reset key issue information that is information necessary for issuing reset key data.

The reset key determiner 100C determines whether reset of the password is possible as follows, for example. The reset key data is created by generating a digital signature using an ECDSA (Elliptic Curve Digital Signature Algorithm) with a private key for data in which the reset key issue code issued by the reset key issue code issuer 100A and the serial number of the image forming apparatus 10 are concatenated, and adding predetermined header information to the digital signature. When the service person or administrator of the image forming apparatus 10 connects an external storage medium (USB memory or the like) storing the reset key data to the connector 150 of the image forming apparatus 10, the controller 100 confirms whether there is a file in the connected external storage medium that includes the reset key issue code issued by the reset key issue code issuer 100A as at least a part of the filename. If there is a corresponding file in the connected external storage medium, the controller 100 refers to header information of the file and confirms whether the header information is in a predetermined format for reset key data. The header information enumerates fixed data (character string) indicating that it is reset key data, version information for responding to format changes, information on which position (offset address, size) in the input data signature data is located, identification information of a key to be used (when a key pair to be used is not fixed), an encoding format, and the like. Among these, by verifying whether the fixed data (character string) indicating that it is reset key data or the version information for responding to format changes is as expected, and whether there is no discrepancy between the information on which position (offset address, size) signature data is located and the data size, it is confirmed whether the header information is in the predetermined format for reset key data. If the header information is in the predetermined format for reset key data, the controller 100 extracts the digital signature from the reset key data, generates data in which the reset key issue code and the serial number are concatenated, and verifies the digital signature against the generated data using a public key with the ECDSA algorithm. If verification of the digital signature is successful, the controller 100 determines that the administrator password can be reset.

Regarding the issuance of the reset key issue code, it is preferable to issue a different reset key issue code for each issuance, for example, so that a different reset key issue code is issued each time the administrator password reset screen D71 is displayed. By doing so, the value of the reset key data including the reset key issue code also becomes different for each issuance of the reset key issue code. As a result, reuse of reset key data can be prevented, and security can be improved.

The password setter 100D sets or resets (resets) an administrator password of the image forming apparatus 10. The password setter 100D stores the administrator password in a password storage area 110-3 described later.

The display controller 100E controls screens displayed on the display 120. In particular, the display controller 100E displays a reset screen according to an administrator password reset process described later.

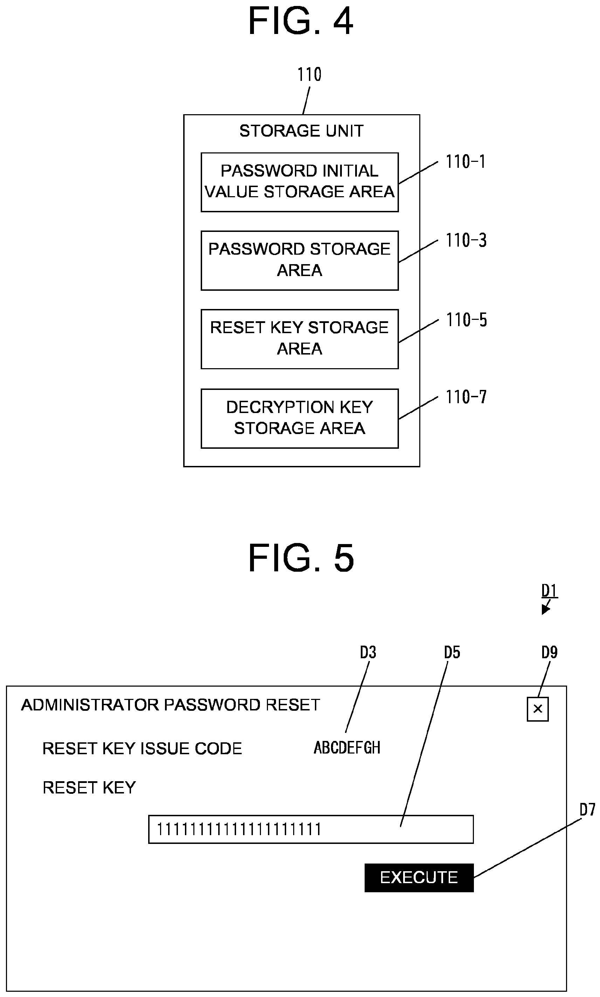

FIG. 4 is a block diagram of the storage unit 110 of the image forming apparatus 10 according to the first embodiment of the present disclosure. The storage unit 110 includes a password initial value storage area 110-1, a password storage area 110-3, a reset key storage area 110-5, and a decryption key storage area 110-7.

The password initial value storage area 110-1 is an area for storing an initial value of the administrator password (hereinafter also referred to as an initial password). The password initial value storage area 110-1 may store the initial password at the time the image forming apparatus 10 is shipped. The initial password may be stored in the ROM 110A. The initial password is preferably stored in a secure area of the storage unit 110. For example, the storage unit 110 may include a non-volatile memory of a module compatible with a TPM (Trusted Platform Module), and the non-volatile memory may store the initial password.

The password storage area 110-3 stores a password set via the operation acceptor 130. The password storage area 110-3 may be provided in a rewritable area of the storage unit 110. The password storage area 110-3 may be provided in the storage 110C, in which case it is preferably encrypted. The encryption method for encrypting the password is not particularly limited.

The reset key storage area 110-5 stores reset key data input from the outside.

The decryption key storage area 110-7 stores a decryption key for decrypting encrypted reset key data. The decryption key storage area 110-7 may store the decryption key at the time the image forming apparatus 10 is shipped. The decryption key storage area 110-7 is preferably provided in a secure area of the storage unit 110.

### 1.4 General Operation

Before describing operations according to the present disclosure, general operations during initial password setting and password reset will be described using the image forming apparatus 10. This operation example is performed in the image forming apparatus 10 shipped to a destination where a default password may be stored in the image forming apparatus 10 as an administrator password for a processing apparatus such as the image forming apparatus 10.

### 1.4.1 Setting of Initial Password

At the time the image forming apparatus 10 is shipped, an initial password (for example, 00000) is stored in the password initial value storage area 110-1.

### 1.4.2 Reset of Password

The image forming apparatus 10 performs a simple authentication process to authenticate a service person, administrator, or the like of the image forming apparatus. Simple authentication is performed by, for example, the image forming apparatus 10 displaying a reset key issue code (for example, 8 alphabetic characters), then the service person, administrator, or the like of the image forming apparatus notifying a sales company of the displayed reset key issue code, then the sales company notifying the service person or the like of the image forming apparatus 10 of a reset key (for example, 20 digits), then the service person or the like of the image forming apparatus 10 entering the notified reset key into the image forming apparatus, and then determining whether reset is possible based on the reset key issue code displayed by the image forming apparatus and the entered reset key.

Screen D1 in FIG. 5 is an example of a screen displayed on the display 120 when the image forming apparatus 10 performs a password reset in general operation example 1. The screen D1 includes a reset key issue code display field D3, a reset key input field D5, an execute button D7, and an OK button D9.

The reset key issue code display field D3 is a display field for displaying a reset key issue code issued by the reset key issue code issuer 100A. The service person or the like of the image forming apparatus 10 notifies a reset key issue authority holder of the reset key issue code displayed in the reset key issue code display field D3.

The reset key input field D5 is a field for displaying a reset key input via the operation acceptor 130.

When the execute button D7 is operated via the operation acceptor 130, the controller 100 determines whether the administrator password can be reset based on the reset key issue code displayed in the reset key issue code display field D3 and the character string input in the reset key input field D5.

When the close button D9 is operated via the operation acceptor 130, the controller 100 closes the administrator password reset screen D1 (ends display of the administrator password reset screen D1). At this time, the administrator password reset is cancelled, and the screen displayed on the display 120 before display of the administrator password reset screen D1 is displayed. Note that a home screen may be displayed instead of the screen displayed immediately before the administrator password reset screen D1.

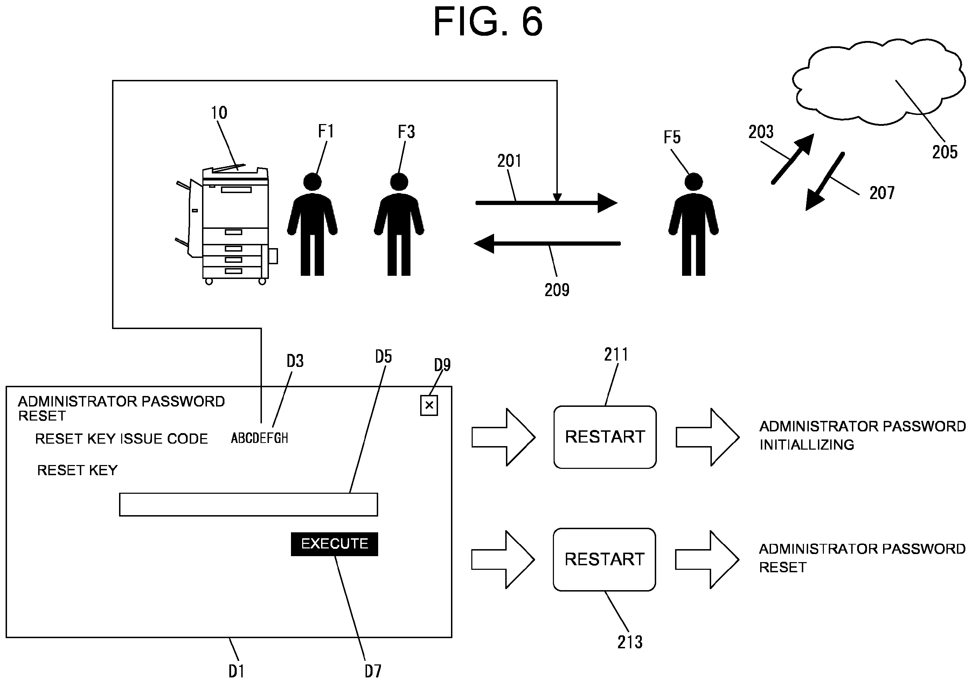

FIG. 6 is a conceptual schematic diagram of a general reset method for an administrator password of the image forming apparatus 10.

When an administrator F1 or a service person F3 of the image forming apparatus 10 performs an operation to reset the administrator password via the operation acceptor 130 of the image forming apparatus 10, the controller 100 displays the screen D1 on the display 120. The administrator F1 or service person F3 of the image forming apparatus 10 reads the reset key issue code from the reset key issue code display field D3 of the screen D1 and notifies a reset key issue authority holder F5 (arrow 201). The reset key issue code is, for example, a character string of 8 characters, and may be a unique value for each model of the image forming apparatus 10. Any method of notifying the reset key issue authority holder F5 of the reset key issue code may be used; for example, it may be notified verbally, or by using e-mail, messaging software, or the like.

The reset key issue authority holder F5 is, for example, a sales person of a sales company of the image forming apparatus 10. Upon receiving the reset key issue code, the reset key issue authority holder F5 transmits a reset key issue request together with the received reset key issue code to a server 205 (arrow 203).

The server 205 performs a process (reset key generation process) of generating a reset key based on the reset key issue code received from the reset key issue authority holder F5, and transmits the generated reset key to the reset key issue authority holder F5 (arrow 207). The server 205 is operated, for example, by a manufacturer of the image forming apparatus 10.

Upon receiving the reset key from the server 205, the reset key issue authority holder F5 notifies the administrator F1 or service person F3 of the image forming apparatus 10 of the received reset key (arrow 209). Transmission means for the reset key issue code and the reset key indicated by arrows 203 and 207 are not particularly limited.

For example, the server 205 may be a web server that publishes a web page including an input field for entering a reset key issue code and a display field for displaying a reset key generated by a reset key generation process based on the reset key issue code entered in the input field. In this case, the administrator F1 or service person F3 of the image forming apparatus 10 accesses the web page published by the server 205 with a browser of a terminal device such as a personal computer or a smartphone, enters the reset key issue code in the input field (arrow 203), and reads the reset key displayed in the display field (arrow 207).

Alternatively, the server 205 may be an e-mail server. In this case, the administrator F1 or service person F3 of the image forming apparatus 10 transmits an e-mail to an e-mail address of the reset key issue authority holder F5 managed by the server 205 using a mailer of the terminal device

(arrows 201 and 203). The e-mail may have, for example, "Reset Key Issue Request" as a subject and include the reset key issue code in the body. In this case, when the server 205 detects receipt of an e-mail addressed to the e-mail address of the reset key issue authority holder F5 with the subject "Reset Key Issue Request," the server 205 automatically executes a predetermined reset key generation process and transmits an e-mail including the generated reset key in the body to the source address of the received e-mail (arrow 207).

Upon receiving the reset key from the server 205, the reset key issue authority holder F5 notifies the administrator F1 or service person F3 of the image forming apparatus 10 of the received reset key (arrow 209). Similar to the notification of the reset key issue code at arrow 201, any method for notifying the reset key at arrow 209 may be used; for example, it may be notified verbally, or by using e-mail, messaging software, or the like.

Upon being notified of the reset key from the reset key issue authority holder F5, the administrator F1 or service person F3 of the image forming apparatus 10 enters the notified reset key into the reset key input field D5 of the screen D1 displayed on the display 120 of the image forming apparatus 10, and operates the execute button D7 via the operation acceptor 130. In response to this operation, the reset key determiner 100C determines whether reset is possible, and if determined to be possible, the password setter 100D resets the password. There are, for example, the following two methods for resetting the password.

In a first example, the password setter 100D reads the password initial value stored in the password initial value storage area 110-1, overwrites the password stored in the password storage area 110-3 with the password initial value, and changes the administrator password to the password initial value by restarting the image forming apparatus 10 (restart 211).

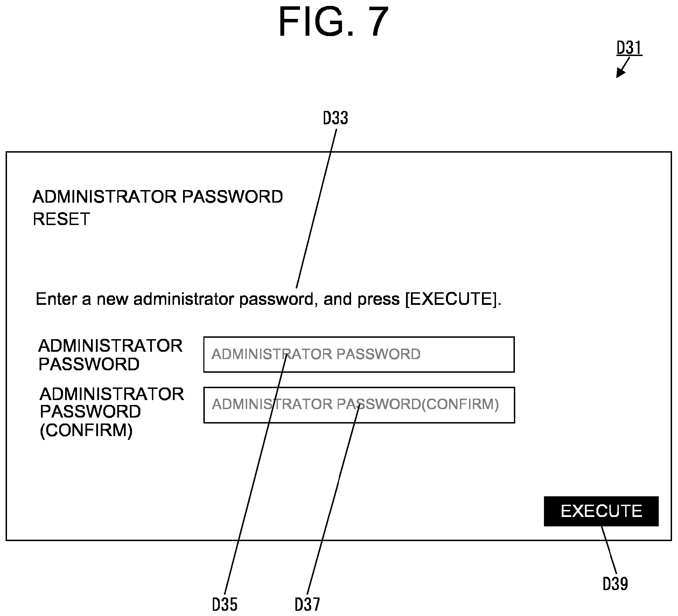

In a second example, the password setter 100D requests the user to set a new password (resetting the administrator password). An administrator password resetting screen D31 in FIG. 7 is an example of an administrator password resetting screen displayed on the display 120 by restarting the image forming apparatus 10 (restart 231). The administrator password resetting screen D31 includes a message D33, set password input fields D35 and D37, and an execute button D39. The administrator password resetting screen D31 may be one screen constituting an initial setting wizard executed by restarting the image forming apparatus 10 (restart 231). In this case, the button D39 is a "Next" button instead of an "Execute" button.

The message D33 is for explaining operations for resetting the password. In the administrator password resetting screen D31, the message D33 is text, but it may be in a form other than text; for example, it may be an image or a video for explaining operations for resetting the password.

The set password input fields D35 and D37 are input fields for entering a newly set administrator password, and when a character string is input via the operation acceptor 130, asterisks (*) corresponding to the number of characters of the input character string are displayed. When the execute button D39 is operated via the operation acceptor 130, the password setter 100D compares the character string input in the set password input field D35 with the character string input in the set password input field D37, and if they match, resets (resets) the administrator password by overwriting the current password stored in the password storage area 110-3 using that character string.

### 1.5 Operation according to Present Disclosure

A case where the image forming apparatus 10 performs operations according to the present disclosure will be described. It is preferable that any of the configurations described in FIG. 3 appropriately execute the following processes, but for convenience of description, they will be described as being executed by the controller 100. This operation example is performed, for example, in a processing apparatus where initial setting by a user (administrator) of a processing apparatus such as the image forming apparatus 10 is necessary as an administrator password for the processing apparatus such as the image forming apparatus 10, and when the password is reset, the user is requested to reset the password. Alternatively, this operation example may be performed when a target market (destination) of a processing apparatus such as the image forming apparatus 10 is a specific destination such as a country or region under a security enhancement law system.

### 1.5.1 Setting of Initial Password

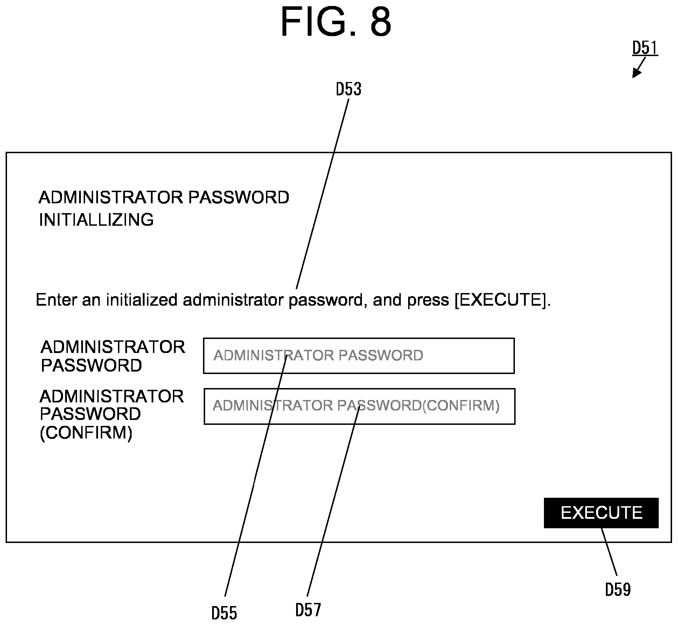

An administrator password initial setting screen D51 in FIG. 8 is an example of a screen displayed on the display 120 when setting an initial password according to the first embodiment of the present disclosure in the image forming apparatus 10. For example, when an operation to initially set the administrator password is performed via the operation acceptor 130, the controller 100 displays the administrator password initial setting screen D51 on the display 120. Alternatively, the administrator password initial setting screen D51 may be one screen constituting an initial setting wizard executed during initial installation (initial setting) of the image forming apparatus 10. In this case, the button D59 is a "Next" button instead of an "Execute" button. If no initial password is stored in the password initial value storage area 110-1, or if there is no password initial value storage area 110-1 in the storage unit 110, the controller 100 may display the administrator password initial setting screen D51 on the display 120 during initial installation of the image forming apparatus 10 (when the power of the image forming apparatus 10 is turned on for the first time), regardless of whether there is an operation to initially set the administrator password via the operation acceptor 130.

The administrator password initial setting screen D51 includes a message D53, set password input fields D55 and D57, and an execute button D59.

The message D53 is for explaining operations for initially setting the password. In the administrator password initial setting screen D51, the message D53 is text, but it may be in a form other than text; for example, it may be an image or a video for explaining operations for initially setting the password.

The message D53 is for explaining operations for initially setting the password. The set password input fields D55 and D57 are input fields for entering a newly set administrator password, and when a character string is input via the operation acceptor 130, asterisks (*) corresponding to the number of characters of the input character string are displayed. When the execute button D59 is operated via the operation acceptor 130, the password setter 100D compares the character string input in the set password input field D55 with the character string input in the set password input field D57, and if they match, stores that character string as an initial password of the administrator in the password storage area 110-3.

### 1.5.2 Reset of Password

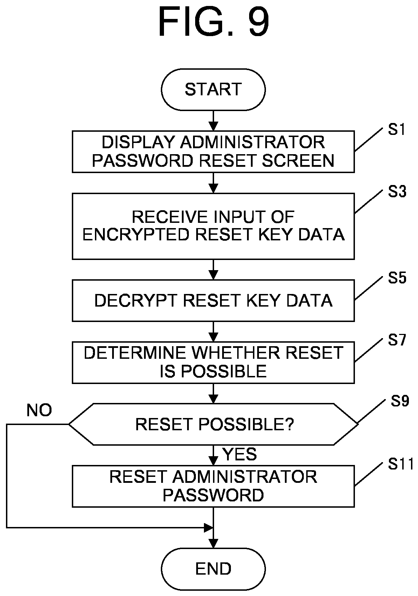

FIG. 9 is a flowchart for explaining an administrator password reset process of the image forming apparatus 10 according to the first embodiment of the present disclosure.

In response to an operation from the operation acceptor 130, the controller 100 displays an administrator password reset screen on the display 120 (S1). The administrator password reset screen is a screen that the controller 100 displays on the display 120 when an operation to reset (reset) the administrator password is received via the operation acceptor 130.

The administrator password reset screen will be described in detail later, but an administrator or service person of the image forming apparatus 10 notifies a reset key issue authority holder of a reset key issue code displayed on the administrator password reset screen and receives encrypted reset key data from the reset key issue authority holder. The reset key data is, for example, a reset key file having a file size of less than 100 bytes. Any encryption method used when encrypting the reset key data may be used; for example, common key method or public key method may be used.

The administrator or service person of the image forming apparatus 10 stores the received encrypted reset key data in an external storage device connectable to the connector 150 of the image forming apparatus 10. This external storage device is, for example, a USB (Universal Serial Bus) memory. Instead of an external storage device, the reset key data may be stored in online storage (for example, Google Drive by Google, OneDrive by Microsoft, Dropbox by Dropbox, or the like) connectable from the communicator 140 of the image forming apparatus 10.

When the service person of the image forming apparatus 10 inputs the encrypted reset key data into the image forming apparatus 10 (S3), the controller 100 decrypts the reset key data using the decryption key stored in the decryption key storage area 110-7 (S5) and determines whether reset is possible based on the decrypted reset key data (S7). If determined that reset is possible (S9, YES), the controller 100 resets the administrator password by overwriting the current administrator password stored in the password storage area 110-3 with the administrator password input in the administrator password reset screen via the operation acceptor 130 (S11). If determined that reset is not possible (S9, NO), the process ends without resetting the administrator password.

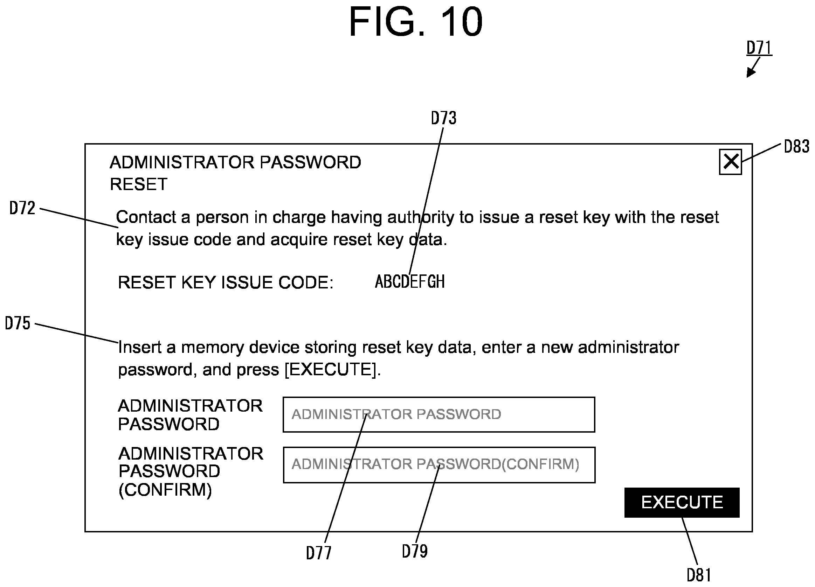

The screen in FIG. 10 is an example of an administrator password reset screen displayed in the image forming apparatus 10 according to the first embodiment of the present disclosure. The administrator password reset screen D71 includes a message D72, a reset key issue code display field D73, a message D75, set password input fields D77 and D79, an execute button D81, and a close button D83.

The message D72 is for explaining procedures for acquiring reset key data to the administrator or service person of the image forming apparatus 10. The message D72 explains notifying a person in charge having authority to issue a reset key (reset key issue authority holder) of the reset key issue code displayed in the reset key issue code display field D73 and receiving reset key data from the reset key issue authority holder.

The reset key issue code display field D73 is a display field for displaying a reset key issue code issued by the reset key issue code issuer 100A. The reset key issue code is, for example, an 8-digit character string. The administrator or service person of the image forming apparatus 10 notifies the reset key issue authority holder of the reset key issue code displayed in the reset key issue code display field D73. It is preferable that the reset key issue code displayed in the reset key issue code display field D73 differs each time the administrator password reset screen D71 is displayed. In addition, when the target market (destination) of a processing apparatus such as the image forming apparatus 10 is a specific destination such as a country or region under a security enhancement law system, the reset key issue code is preferably, for example, a character string of 12 digits or more.

The message D75 is for explaining operations for resetting the password. In the administrator password reset screen D71, the message D75 is text, but it may be in a form other than text; for example, it may be an image or a video for explaining operations for resetting the password.

Two messages addressed to the administrator or service person of the image forming apparatus 10 are described in the message D75. One describes a message prompting connection of an external storage device storing reset key data to the connector 150. Another describes a message prompting input of a new administrator password.

In FIG. 10, as an example of the message D75, it is described as "Insert a memory device storing reset key data, enter a new administrator password, and press [Execute]." Here, the memory device refers to an external storage device that stores reset key data, and "Insert a memory device" refers to connecting the external storage device to the connector 150. "Enter a new administrator password and press [Execute]" refers to entering a new administrator password in set password input fields D77 and D79 described below via the operation acceptor 130 and operating the execute button D81.

The set password input fields D77 and D79 are input fields for entering a newly set administrator password, and when a character string is input via the operation acceptor 130, asterisks (*) corresponding to the number of characters of the input character string are displayed.

When the execute button D81 is operated via the operation acceptor 130, the controller 100 reads the reset key data from the memory device (external storage device) connected via the connector 150 and determines whether reset of the administrator password is possible based on the read reset key data. If determined that reset is possible, the controller 100 compares the character string input in the set password input field D77 with the character string input in the set password input field D79, and if they match, resets (resets) the administrator password by overwriting the current password stored in the password storage area 110-3 using that character string.

When the close button D83 is operated via the operation acceptor 130, the controller 100 closes the administrator password reset screen D71 (ends display of the administrator password reset screen D71). At this time, the administrator password reset is cancelled, and the screen displayed on the display 120 before display of the administrator password reset screen D71 is displayed. Note that a home screen may be displayed instead of the screen displayed immediately before the administrator password reset screen D71.

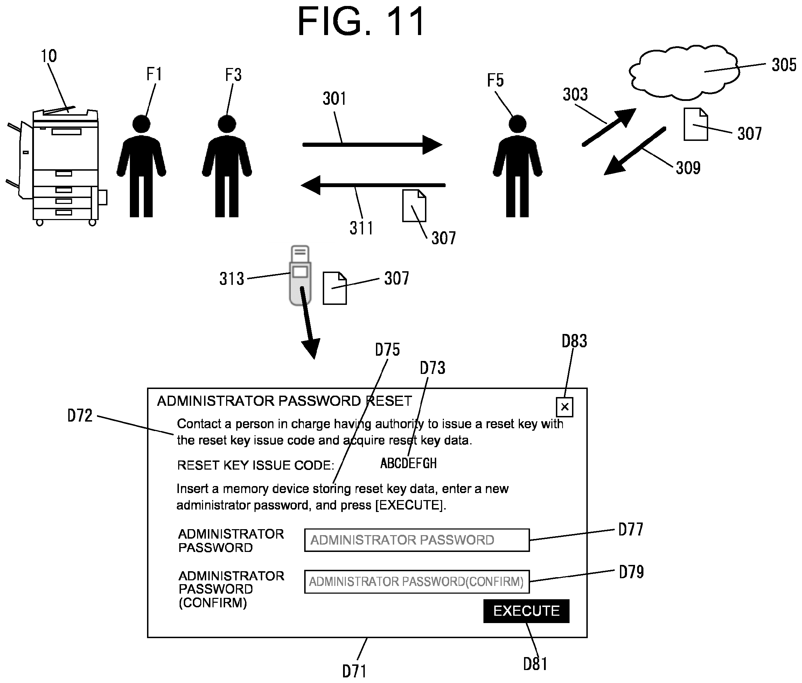

FIG. 11 is a conceptual schematic diagram for explaining a reset method of the image forming apparatus 10 according to the first embodiment of the present disclosure.

For example, when the administrator F1 or service person F3 of the image forming apparatus 10 performs an operation to reset the administrator password via the operation acceptor 130 of the image forming apparatus 10, the controller 100 displays the administrator password reset screen D71 on the display 120. The administrator F1 or service person F3 of the image forming apparatus 10 reads the reset key issue code from the reset key issue code display field D73 of the screen D71 in accordance with the message D72 and notifies the reset key issue authority holder F5 (arrow 301).

The reset key issue code is, for example, a character string of 8 characters, and may be a unique value for each model of the image forming apparatus 10. Further, the reset key issue code is preferably a character string with 12 characters or more. Note that the number of characters of the reset key issue code may be changed depending on whether the target market (destination) of the image forming apparatus 10 is a specific destination such as a country or region under a security enhancement law system. For example, of the character string of 12 characters or more constituting the reset key issue code, an 8-character string uses a unique value determined for each model of the image forming apparatus 10, while characters other than those 8 characters may be generated based on, for example, a serial number uniquely assigned to an individual of the image forming apparatus 10, identification information of an owner or administrator of the image forming apparatus 10, or the like. Any method of notifying the reset key issue authority holder F5 of the reset key issue code may be used; for example, it may be notified verbally, or by using e-mail, messaging software, or the like.

The reset key issue authority holder F5 is, for example, a sales person of a sales company of the image forming apparatus 10. Upon receiving the reset key issue code, the reset key issue authority holder F5 transmits a reset key issue request together with the received reset key issue code to a server 305 (arrow 303).

The server 305 executes a process of generating a reset key based on the reset key issue code received from the reset key issue authority holder F5 (reset key generation process), encrypts the generated reset key data 307, and transmits it to the reset key issue authority holder F5 (arrow 309). The server 305 is, for example, a server operated by a manufacturer of the image forming apparatus 10. Note that the server 305 may control whether to generate a reset key or reset key data based on the number of characters of the received reset key issue code and whether the target market (destination) of the image forming apparatus 10 is a specific destination such as a country or region under a security enhancement law system. When the target market (destination) of the image forming apparatus 10 is a specific destination such as a country or region under a security enhancement law system, it is preferable that reset key data is generated.

Upon receiving the reset key data 307 from the server 305, the reset key issue authority holder F5 contacts the administrator F1 or service person F3 of the image forming apparatus 10 with the received reset key data 307 (arrow 311). Transmission means for the reset key issue code and the reset key data indicated by arrows 303, 309, and 311 are not particularly limited.

For example, the server 305 may be a web server that publishes a web page including an input field for entering a reset key issue code and a link to reset key data 307 generated by a reset key generation process based on the reset key issue code entered in the input field. In this case, the administrator F1 or service person F3 of the image forming apparatus 10 accesses the web page published by the server 305 with a browser of a terminal device such as a personal computer or a smartphone, enters the reset key issue code in the input field (arrow 303), and follows the link to download the reset key data 307 (arrow 309).

Alternatively, the server 305 may be an e-mail server. In this case, the administrator F1 or service person F3 of the image forming apparatus 10 transmits an e-mail to an e-mail address of the reset key issue authority holder F5 managed by the server 305 using a mailer of the terminal device (arrows 301 and 303). The e-mail may have, for example, "Reset Key Issue Request" as a subject and include the reset key issue code in the body. In this case, when the server 305 detects receipt of an e-mail addressed to the e-mail address of the reset key issue authority holder F5 with the subject "Reset Key Issue Request," the server 305 automatically executes a predetermined reset key generation process and transmits an e-mail with the generated reset key data 307 attached to the source address of the received e-mail (arrow 309).

Upon receiving the reset key data 307 from the server 305, the reset key issue authority holder F5 contacts the administrator F1 or service person F3 of the image forming apparatus 10 with the received reset key data 307 (arrow 311). Similar to the notification of the reset key issue code at arrow 301, any method for contacting with the reset key data 307 at arrow 311 may be used. For example, the reset key issue authority holder F5 may hand a USB memory storing the reset key data 307 to the administrator F1 or service person F3 of the image forming apparatus 10. Alternatively, the reset key issue authority holder F5 may transmit an e-mail with the reset key data 307 attached to an e-mail address of the administrator F1 or service person F3 of the image forming apparatus 10. Alternatively, the reset key issue authority holder F5 may pass the reset key data 307 to the administrator F1 or service person F3 of the image forming apparatus 10 via online storage (for example, Google Drive by Google, OneDrive by Microsoft, Dropbox by Dropbox, or the like).

Upon receiving the reset key data 307, the administrator F1 or service person F3 of the image forming apparatus 10 inputs the reset key data 307 into the image forming apparatus 10. For example, the administrator F1 or service person F3 of the image forming apparatus 10 inputs the reset key data 307 into the image forming apparatus 10 by connecting an external storage device such as a USB memory 313 in which the reset key data 307 is stored to the connector 150 in accordance with the message D75 of the administrator password reset screen D71. Alternatively, the administrator F1 or service person F3 of the image forming apparatus 10 may operate to download the reset key data 307 stored in online storage into the storage unit 110 via the communicator 140 and the operation acceptor 130. As described above, since the reset key data 307 is encrypted, the controller 100 decrypts the input reset key data 307.

After inputting the reset key data 307 into the image forming apparatus 10, the administrator F1 or service person F3 of the image forming apparatus 10 enters a character string to be newly set as a password into set password input fields D77 and D79 via the operation acceptor 130, and operates the execute button D81. When the character strings input in the set password input fields D77 and D79 match and determination of reset possibility based on the reset key data 307 is determined to be reset possible, the controller 100 resets (resets) the administrator password by overwriting the current administrator password stored in the password storage area 110-3 with the character strings input in the set password input fields D77 and D79.

As described above, in the first embodiment, the image forming apparatus 10 does not store an initial password of the administrator in the password initial value storage area 110-1 and is a type of processing apparatus that requests initial setting of the administrator password by a user during initial setting by means such as an initial setting wizard; therefore, a method of requesting resetting of the administrator password by the user when the administrator password is reset is adopted. As a result, in response to an operation to reset the administrator password, the controller 100 displays the administrator password reset screen D71 in which a message prompting connection of an external storage device storing reset key data to the connector 150 and a message prompting input of a new administrator password are described.

### 1.6 Effect

According to the first embodiment, in response to an operation to reset the administrator password, a reset key issue code, a message prompting connection of an external storage device storing reset key data to the user, and an input field for a new administrator password are displayed on the same screen, like the administrator password reset screen D71. Therefore, according to the first embodiment, compared to a case where these are displayed on separate screens, it is possible to suppress the number of screen transitions occurring when resetting the administrator password.

### 2. Second Embodiment

A second embodiment will be described. In the first embodiment, the controller 100 displayed the administrator password reset screen D71 in response to an operation to reset the administrator password. In the message D75 of the administrator password reset screen D71, a message prompting connection of an external storage device storing reset key data to the connector 150 and a message prompting input of a new administrator password were described. In contrast, in an administrator password reset screen according to the second embodiment, only a message prompting connection of an external storage device storing reset key data to the connector 150 is described. This is because in the second embodiment, a reset method is adopted where when the administrator password is reset based on connection of an external storage device storing reset key data, the administrator password is returned to the initial password pre-stored in the password initial value storage area 110-1. Hereinafter, description will focus on parts different from the first embodiment regarding configuration and processing.

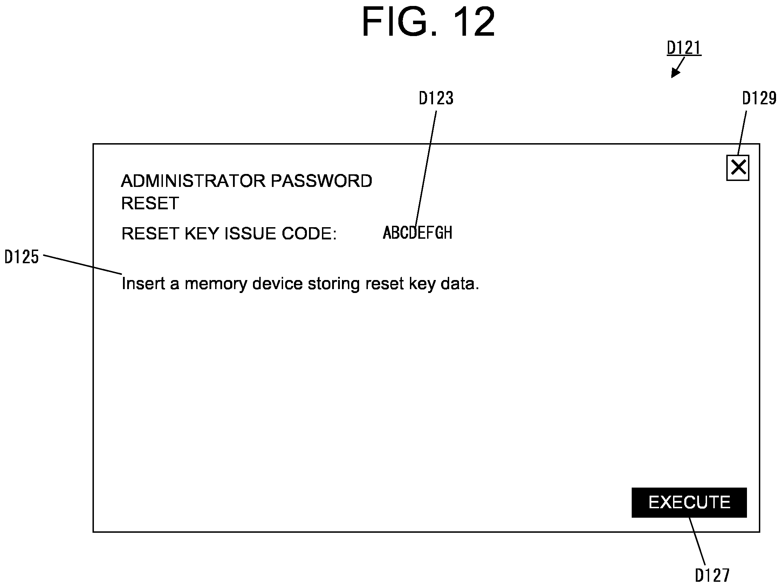

An administrator password reset screen D121 in FIG. 12 is an example of a screen displayed on the display 120 of the image forming apparatus 10 according to the second embodiment of the present disclosure. The administrator password reset screen D121 includes a reset key issue code display field D123, a message D125, an execute button D127, and a close button D129.

The reset key issue code display field D123 is a display field for displaying a reset key issue code issued by the reset key issue code issuer 100A. The reset key issue code is, for example, an 8-digit character string. The administrator F1 or service person F3 of the image forming apparatus 10 notifies the reset key issue authority holder F5 of the reset key issue code displayed in the reset key issue code display field D123.

The message D125 is for explaining operations for resetting the password. In the administrator password reset screen D121, the message D125 is text, but it may be in a form other than text; for example, it may be an image or a video for explaining operations for resetting the password. A message prompting connection of an external storage device storing reset key data to the connector 150 is described in the message D125 for the administrator F1 or service person F3 of the image forming apparatus 10. Note that in addition to this message, a message explaining that when the external storage device storing reset key data is connected to the connector 150 and the execute button is operated, the administrator password returns to the initial value may be described.

When the execute button D127 is operated via the operation acceptor 130, the controller 100 reads the reset key data from the memory device (external storage device) connected via the connector 150 and determines whether reset of the administrator password is possible based on the read reset key data. If determined that reset is possible, the controller 100 resets (resets) the administrator password by reading the initial password stored in the password initial value storage area 110-1 and overwriting the current password stored in the password storage area 110-3 using that initial password.

When the close button D129 is operated via the operation acceptor 130, the controller 100 closes the administrator password reset screen D121 (ends display of the administrator password reset screen D121). At this time, the administrator password reset is cancelled, and the screen displayed on the display 120 before display of the administrator password reset screen D121 is displayed. Note that a home screen may be displayed instead of the screen displayed immediately before the administrator password reset screen D121.

According to the second embodiment, the controller 100 of the image forming apparatus 10 determines whether reset of the administrator password is possible based on connection of an external storage device storing reset key data, and if determined that reset is possible, resets the administrator password by changing the current password to the initial password stored in the password initial value storage area 110-1.

### 3. Third Embodiment

A third embodiment will be described. In the administrator password reset screen D71 of the first embodiment, both connecting an external storage device storing reset key data to the connector 150 and entering a new administrator password were requested to the administrator, service person, or the like of the image forming apparatus 10. In contrast, in an administrator password reset screen of the third embodiment, while connecting an external storage device storing reset key data to the connector 150 is requested, input of a new administrator password is optional. When a new administrator password is input, similarly to the first embodiment, the administrator password is updated to the input password. When no new administrator password is input, similarly to the third embodiment, the administrator password is reset using the initial password pre-stored in the password initial value storage area 110-1. Hereinafter, description will focus on parts different from the first embodiment regarding configuration and processing. Note that in the third embodiment, it is assumed that the password initial value storage area 110-1 pre-stores the initial password.

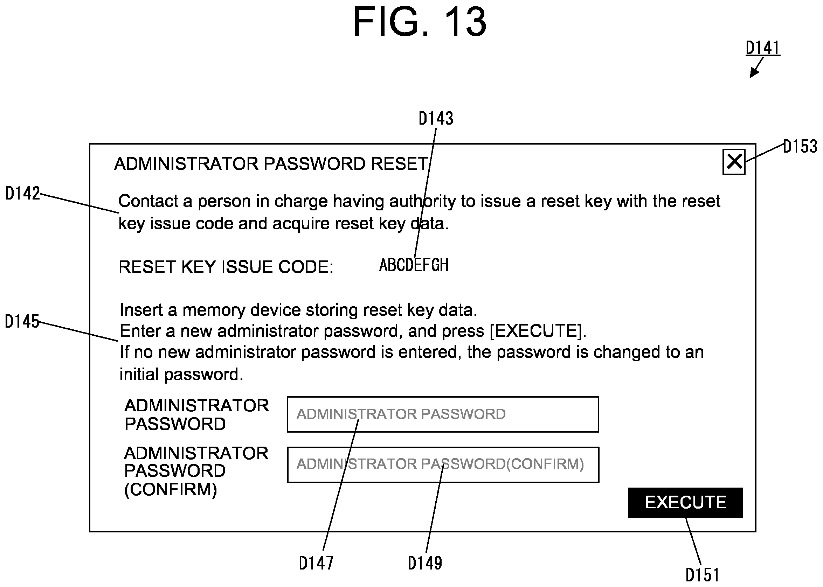

An administrator password reset screen D141 in FIG. 13 is an example of a screen displayed on the display 120 of the image forming apparatus 10 according to the fourth embodiment of the present disclosure. The administrator password reset screen D141 includes a message D142, a reset key issue code display field D143, a message D145, set password input fields D147 and D149, an execute button D151, and a close button D153.

The message D142 is for explaining procedures for acquiring reset key data to the administrator or service person of the image forming apparatus 10. The message D142 explains notifying the reset key issue authority holder of the reset key issue code displayed in the reset key issue code display field D143 and receiving reset key data from the reset key issue authority holder.

The reset key issue code display field D143 is a display field for displaying a reset key issue code issued by the reset key issue code issuer 100A. The reset key issue code is, for example, an 8-digit character string. A service person or the like of the image forming apparatus 10 notifies the reset key issue authority holder of the reset key issue code displayed in the reset key issue code display field D143.

The message D145 is for explaining operations for resetting the password. In the administrator password reset screen D141, the message D145 is text, but it may be in a form other than text; for example, it may be an image or a video for explaining operations for resetting the password.

Three messages addressed to the administrator or service person of the image forming apparatus 10 are described in the message D145. As a first message, a message prompting connection of an external storage device storing reset key data to the connector 150 is described. As a second message, a message prompting input of a new administrator password is described. As a third message, a message notifying that when no new administrator password is input, the administrator password returns to the initial password is described.

The set password input fields D147 and D149 are input fields for entering a newly set administrator password, and when a character string is input via the operation acceptor 130, asterisks (*) corresponding to the number of characters of the input character string are displayed.

When the execute button D151 is operated via the operation acceptor 130, the controller 100 reads the reset key data from the memory device (external storage device) connected via the connector 150 and determines whether reset of the administrator password is possible based on the read reset key data. If determined that reset is possible, the controller 100 determines whether character strings are input in set password input fields D147 and D149.

If input, the controller 100 compares the character string input in the set password input field D147 with the character string input in the set password input field D149, and if they match, resets (resets) the administrator password by overwriting the current password stored in the password storage area 110-3 using that character string.

If not input, the controller 100 resets (resets) the administrator password by reading the initial password stored in the password initial value storage area 110-1 and overwriting the current password stored in the password storage area 110-3 using that initial password.

When the close button D153 is operated via the operation acceptor 130, the controller 100 closes the administrator password reset screen D141 (ends display of the administrator password reset screen D141). At this time, the administrator password reset is cancelled and returns to the screen displayed before display of the administrator password reset screen D141 on the display 120. Note that a home screen may be displayed instead of the screen displayed immediately before the administrator password reset screen D141.

According to the third embodiment, by operating the execute button D151 after entering a desired character string into set password input fields D147 and D149, the administrator, service person, or the like of the image forming apparatus 10 can set the desired character string as an administrator password after reset. Further, by operating the execute button D151 while nothing is input in set password input fields D147 and D149, the administrator password can be returned to the initial password.

### 4. Fourth Embodiment

A fourth embodiment will be described. In the first embodiment, the administrator password reset screen was configured by a single screen, and the reset key issue code display field D73 and set password input fields D77 and D79 were displayed within the same screen D71. In contrast, in the fourth embodiment, the administrator password reset screen is configured by a screen of two pages, and the reset key issue code display field and the set password input field are displayed on separate screens.

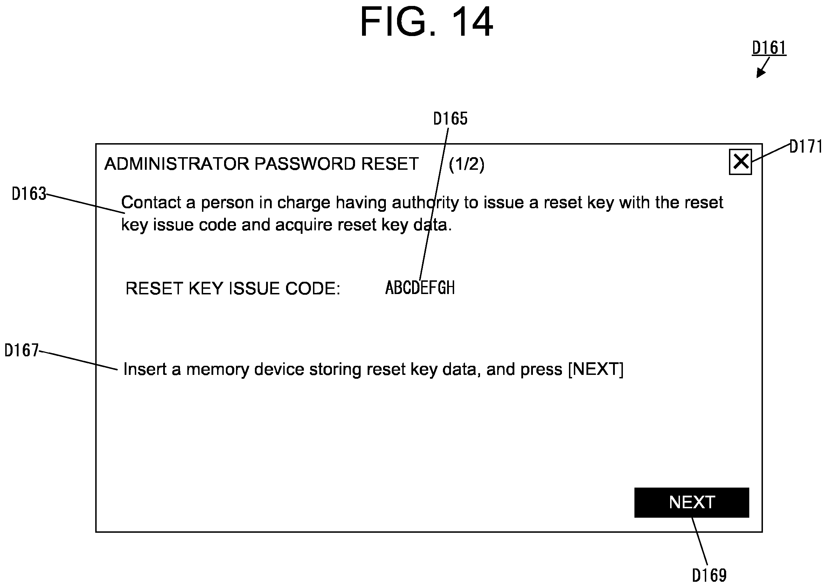

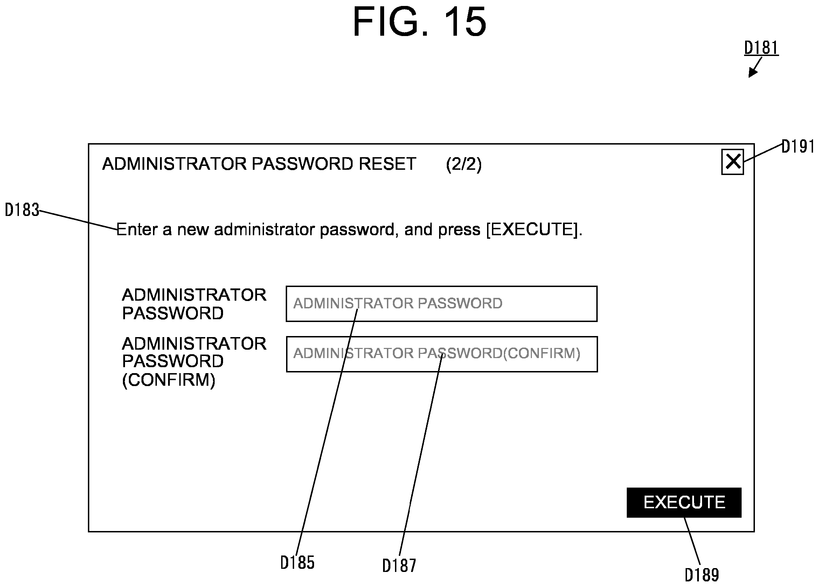

A screen D161 in FIG. 14 and a screen D181 in FIG. 15 are examples of screens displayed on the display 120 of the image forming apparatus 10 according to the fourth embodiment of the present disclosure. When receiving an operation to display an administrator password reset screen via the operation acceptor 130, the controller 100 displays the screen D161 on the display 120 in response to that operation.

Screen D161 is the first page of the administrator password reset screen. The screen D161 includes a message D163, a reset key issue code display field D165, a message D167, a "Next" button D169, and a close button D171.

The message D163 is for explaining procedures for acquiring reset key data to the administrator or service person of the image forming apparatus 10. The message D163 explains notifying the reset key issue authority holder of the reset key issue code displayed in the reset key issue code display field D 165 and receiving a reset key from the reset key issue authority holder.

The reset key issue code display field D 165 is a display field for displaying a reset key issue code issued by the reset key issue code issuer 100A. The reset key issue code is, for example, an 8-digit character string. The administrator or service person of the image forming apparatus 10 notifies the reset key issue authority holder of the reset key issue code displayed in the reset key issue code display field D165. It is preferable that the reset key issue code displayed in the reset key issue code display field D 165 differs each time the administrator password reset screen D161 is displayed.

The message D167 is a message instructing to connect an external storage device (memory device) storing reset key data received from the reset key issue authority holder to the connector 150 and to operate the "Next" button D169 via the operation acceptor 130 for the administrator or service person of the image forming apparatus 10.

In response to an operation via the operation acceptor 130 on the "Next" button D169, the controller 100 transitions the screen displayed on the display 120 from screen D161 to screen D181. It is preferable that the "Next" button D169 is in a state not accepting an operation until an external storage device storing reset key data is connected to the connector 150 and it is determined that reset of the password based on the reset key data is possible. For example, it is preferable to visibly display that the "Next" button D169 is in a state not accepting an operation by graying out the "Next" button D169 or the like until an external storage device storing reset key data is connected to the connector 150 and it is determined that reset of the password based on the reset key data is possible. Note that the "Next" button D169 may be hidden until an external storage device storing reset key data is connected to the connector 150 and it is determined that reset of the password based on the reset key data is possible.

In response to an operation via the operation acceptor 130 on the close button D171, the controller 100 transitions the screen displayed on the display 120 to a screen before the screen D161 was displayed. Note that a home screen may be displayed instead of the screen displayed immediately before the administrator password reset screen D161.

Screen D181 is the second page of the administrator password reset screen. The screen D181 includes a message D183, set password input fields D185 and D187, an execute button D189, and a close button D191.

The message D183 is a message instructing the administrator or service person of the image forming apparatus 10 to operate the execute button D189 after entering an administrator password to be newly set (reset) in set password input fields D185 and D187 via the operation acceptor 130.

Set password input fields D185 and D187 are input fields for entering a newly set administrator password.

When the execute button D189 is operated via the operation acceptor 130, the controller 100 compares character strings input in set password input fields D185 and D187 with each other at that time, and if they match, sets that character string as a new administrator password. If character strings input in set password input fields D185 and D187 do not match, the controller 100 displays a message (not shown) prompting the administrator or service person of the image forming apparatus 10 to re-enter the password in set password input fields D185 and D187.

In response to an operation via the operation acceptor 130 on the close button D191, the controller 100 transitions the screen displayed on the display 120 from screen D181 to screen D161. Note that instead of transitioning to screen D161, it may transition to a home screen.

The controller 100 may accept an operation on the "Next" button D169 via the operation acceptor 130 even in a state where an external storage device storing reset key data is not connected to the connector 150 or in a state where it is not determined that reset of the password based on the reset key data is possible. Even in this case, in response to an operation via the operation acceptor 130 on the "Next" button D169, the controller 100 may transition the screen displayed on the display 120 from screen D161 to screen D181, but at this time, it is preferable that the execute button D189 is in a state not accepting an operation. In addition, at this time, it is preferable that the execute button D189 is grayed out, for example, so that it can be visually understood that it is in a state not accepting an operation.

Upon acquiring reset key data from the reset key issue authority holder, the administrator or service person of the image forming apparatus 10 stores that reset key data in a memory device, connects it to the connector 150, and operates the "Next" button D169 via the operation acceptor 130. In response to this button operation, the controller 100 displays the screen D181 on the display 120.

In the screen D181, the administrator or service person of the image forming apparatus 10 enters a desired password in set password input fields D185 and D187 via the operation acceptor 130 in accordance with the message D183, and then operates the execute button D189. In response to this, the controller 100 verifies the reset key data stored in the memory device. When verification of the reset key data is successful and passwords input in set password input fields D185 and D187 match each other, the controller 100 sets the passwords input in set password input fields D185 and D187 as a new password.

Note that initially when the screen D181 is displayed on the display 120, the execute button D189 may be in a state not accepting an operation via the operation acceptor 130, and at this time, the button D189 may be displayed in a display mode (for example, grayed out) indicating that it is inoperable. The controller 100 monitors input into set password input fields D185 and D187 via the operation acceptor 130, and if passwords input in set password input fields D185 and D187 match each other, the execute button D189 may be changed to an operable state and displayed in a normal display mode indicating that it is operable.

Further, verification of reset key data may be executed when a memory device is connected to the connector 150 and the button D189 is operated via the operation acceptor 130 while the screen D161 is displayed on the display 120. In this case, the controller 100 may transition the screen of the display 120 from screen D161 to screen D181 only if verification of the reset key data is successful.

Furthermore, if verification of the reset key data fails, the controller 100 may display another screen instead of displaying screen D181 on the display 120. The screen displayed instead of screen D181 includes, for example, messages such as notification that verification of reset key data failed, confirmation of whether a wrong memory device is connected to the connector 150, and notification prompting re-acquisition of reset key data.

According to the fourth embodiment, acquisition of reset key data and input of a new password can be communicated to the administrator or service person of the image forming apparatus 10 step by step.

### 5. Modifications

The present disclosure is not limited to each of the above-described embodiments and modifications, and various changes are possible. That is, embodiments obtained by combining technical means appropriately changed within a scope not departing from a gist of the present disclosure are also included in a technical scope of the present disclosure. In the present disclosure, configurations for which a patent is sought are described in the appended claims, but there is no intention to exclude them from the technical scope for the reason that they are not described in the claims.

Further, in the above-described specification, descriptions of "case of" and "when" are described as one example and do not constitute configurations limited to the described contents. Configurations for cases or times other than these are also disclosed within a scope obvious to those skilled in the art, and there is an intention to acquire rights.

Further, regarding processes described in the specification and descriptions accompanied by an order for data flows, they are not limited to the described order. For example, configurations where part of processes are deleted or the order is swapped are also disclosed, and there is an intention to acquire rights.

Further, although some parts of the above-described embodiments are described separately for convenience of description, it goes without saying that they may be executed in combination within a technically possible scope.

In the above-described embodiments, reset of an administrator password was described, but the method of the present disclosure may also be applied to reset of a password of a user other than an administrator.

A program operating in each apparatus in the embodiments is a program (program causing a computer to function) that controls a CPU or the like so as to realize functions of the above-described embodiments. Information handled in these apparatuses is temporarily accumulated in a temporary storage device (for example, RAM) during its processing, and then stored in various storage devices such as ROM (Read Only Memory), HDD, or SSD (Solid State Drive), and read, modified, or written by the CPU as necessary.

Here, a recording medium for storing the program may be any of semiconductor media (for example, ROM, non-volatile memory card, or the like), optical recording media/magneto-optical recording media (for example, DVD (Digital Versatile Disc), MO (Magneto Optical Disc), MD (Mini Disc), CD (Compact Disc), BD (Blu-ray (registered trademark) Disc), or the like), magnetic recording media (for example, magnetic tape, flexible disk, or the like), or the like. Further, by executing the loaded program, not only are functions of the above-described embodiments realized, but functions of the present disclosure may also be realized by processing in cooperation with an operating system or another application program based on instructions of the program.

Further, in a case of distribution to the market, the program can be distributed by being stored in a portable recording medium or transferred to a server computer connected via a network such as the Internet. In this case, it goes without saying that a storage device of the server computer is also included in the present disclosure.

### REFERENCE SIGNS LIST

10 Image forming apparatus (MFP, multi-function peripheral/printer)
100 Controller
100A Reset key issue code issuer
100B Reset key decryption unit
100C Reset key determiner
100D Password setter
100E Display controller
110 Storage unit
110A ROM (Read Only Memory)
110B RAM (Random Access Memory)
110C Storage
110-1 Password initial value storage area
110-3 Password storage area
110-5 Reset key storage area
110-7 Decryption key storage area
120 Display
130 Operation acceptor
140 Communicator
150 Connector
160 Image inputter
170 Image former

## Claims

1. A processing apparatus (10) comprising:
one or more controllers (100); and
a display (120),
wherein the one or more controllers (100) cause the display (120) to display a reset screen that is a screen relating to a reset of an administrator password, and
the reset screen includes a message relating to connection of an external storage device in which reset key data is stored, and an input field for entering a new password to be set after the reset.

2. The processing apparatus (10) according to claim 1, further comprising a storage unit (110),
wherein when an initial value of the administrator password is stored in the storage unit (110), the one or more controllers (100) display, on the display (120), the reset screen that does not include the input field.

3. The processing apparatus (10) according to claim 1, wherein the one or more controllers (100) determine whether setting of the new password is possible based on the reset key data read from the external storage device.

4. The processing apparatus (10) according to claim 3, further comprising a storage unit (110),
wherein when an initial value of the administrator password is stored in the storage unit (110) and the new password is not input in the input field, the one or more controllers (100) set the initial value as the new password.

5. The processing apparatus (10) according to claim 3, wherein the one or more controllers (100) display, on the display (120), a message requesting setting of the administrator password during initial setting of the processing apparatus (10).

6. The processing apparatus (10) according to claim 1, wherein the reset screen includes reset key issue information that is information relating to issuance of the reset key data, and
the one or more controllers (100) update the reset key issue information each time the reset screen is displayed.

7. The processing apparatus (10) according to claim 1,
wherein the external storage device stores the reset key data that is encrypted, and
the one or more controllers (100) decrypt the encrypted reset key data.

8. The processing apparatus (10) according to claim 7, wherein the reset key data is non-reusable.

9. The processing apparatus (10) according to claim 7, wherein the storage unit (110) includes a secure storage area, and
the one or more controllers (100) store, in the secure storage area, a key for decrypting the encrypted reset key data.

10. A method for controlling a processing apparatus (10) including one or more controllers (100) and a display (120), the method comprising:
causing the display to display a reset screen that is a screen relating to a reset of an administrator password,
wherein the reset screen includes a message relating to connection of an external storage device in which reset key data is stored, and an input field for entering a new password to be set after the reset.
